# EUROPEAN PATENT SPECIFICATION

(11) **EP 2 524 167 B1**
(45) Date of publication and mention of the grant of the patent: **30.03.2016**
(21) Application number: 11732704.9
(22) Date of filing: 05.01.2011
(51) Int. Cl.: F23C 9/00, F23B 80/02, F23L 7/00, F22B 35/00, F23N 5/00, F23N 3/00

(54) **METHOD OF COMBUSTING DIFFERENT FUELS IN AN OXYCOMBUSTION BOILER**
VERFAHREN ZUR VERBRENNUNG VERSCHIEDENER KRAFTSTOFFE IN EINEM SAUERSTOFFVERBRENNUNGSKOCHER
PROCÉDÉ POUR BRÛLER DIFFÉRENTS COMBUSTIBLES DANS CHAUDIÈRE À OXYCOMBUSTION

(30) Priority: 12.01.2010 FI 20105018
(43) Date of publication of application: 21.11.2012
(73) Proprietor: Amec Foster Wheeler Energia Oy, 02130 Espoo (FI)
(72) Inventor: HOTTA, Arto, FI-78710 Varkaus (FI)
(74) Representative: Genip Oy
(86) International application number: PCT/FI2011/050006
(87) International publication number: WO 2011/086232

(56) References cited:
- EP-A1- 1 959 193
- WO-A1-2009/110034
- US-A1- 2001 000 863
- US-A1- 2004 175 663
- US-A1- 2004 175 663
- US-A1- 2009 158 978
- US-B2- 6 935 251

## Description

The present invention relates to a method of controlling combustion of solid fuels or mixtures of fuels having different heat values in one oxycombustion boiler in accordance with the preamble of the independent claim. Thus, the present invention especially relates to a method of controlling combustion of a first solid fuel or mixture of fuels having a first lower heat value and a second solid fuel or mixture of fuels having a second lower heat value, which differs from the first lower heat value, in an oxycombustion boiler having a furnace, said method comprising the following steps when combusting the first fuel or mixture of fuels: (a1) feeding the first fuel or mixture of fuels into the furnace; (b1) feeding a stream of substantially pure oxygen into the furnace for combusting the first fuel or mixture of fuels; (c1) removing flue gas generated in the combustion of the first fuel or mixture of fuels from the furnace; and (d1) recirculating a portion of the flue gas back to the furnace, and the following steps when combusting the second fuel or mixture of fuels: (a2) feeding the second fuel or mixture of fuels into the furnace; (b2) feeding a stream of substantially pure oxygen into the furnace for combusting the second fuel or mixture of fuels; (c2) removing flue gas generated in the combustion of the second fuel or mixture of fuels from the furnace, and (d2) recirculating a portion of the flue gas back to the furnace.

The carbon dioxide emitting to the atmosphere with the flue gas from thermal power boilers combusting conventional carbonaceous fossil fuels is a so called green house gas, which is believed to be a significant factor in the global warming. The amount of carbon dioxide emitting to the atmosphere can be minimized by recovering carbon dioxide from the flue gases. When combusting different fuels, the net amount of the carbon dioxide emitting to the atmosphere also depends on the quality of the fuel. Especially, when combusting renewable biofuels and recycled fuels, the net emissions of carbon dioxide can be very low.

Various problems, such as heavy corrosion, can, however, arise when combusting renewable fuels and recycled fuels. Therefore, they are often combusted mixed with less problematic fuels. Such fuels can, however, have both long term and short term variations in their composition, availability and price. For the above-mentioned reasons, it is important to develop combustion methods, by means of which as little as possible of carbon dioxide is emitted to the atmosphere, and by means of which methods different fuels can efficiently be combusted in one thermal power boiler.

The heat value, especially the so called lower heat value (LHV), of many recycled fuels and biofuels is rather low due to the high water content of the fuel. When combusting the fuel, the moisture thereof turns to steam of the flue gas, whereby the volume of the flue gas flow generating in the combustion of recycled fuels and biofuels is relatively high. The result thereof is that the size of the boiler in thermal power plants combusting wet fuels is usually larger than the size of a boiler having the same capacity, but combusting fuels having higher heat values.

When it is desired to combust different fuels or different mixtures of fuels in different situations in one boiler, the boiler has to be dimensioned, in accordance with the prior art, according to the fuel having the lowest possible heat value. A boiler designed in this manner is, however, oversized for combusting fuels having higher heat values, and is, thus, expensive to construct and uneconomical to use.

When the quality of the fuel varies a lot, it can be difficult to optimize the temperatures of the boiler in all situations, whereby the combustion efficiency can decrease and the emissions to the atmosphere can increase. These problems are especially related to multifuel boilers, in which mixtures of coal and biofuels with variable compositions are combusted, as well as to boilers in which, for example, lignite, the water content and/or ash content of which can vary a lot, is combusted.

In oxycombustion method, the fuel is combusted by using a mixture of pure oxygen and recycled flue gas instead of air as combustion gas. In this context, pure oxygen refers to oxygen that is obtained, for example, from an air separation unit, the purity of which oxygen is typically at least 95%. The flue gas generating in the oxycombustion method mainly consists of carbon dioxide, oxygen and water, and, thus, the carbon dioxide of the flue gas can relatively easily be recovered. Thus, it is possible to prevent the escape of the carbon dioxide of the flue gas to the atmosphere.

If the fuel is combusted in pure oxygen, the combustion takes place with great intensity and the temperature of the furnace may well rise very high. To avoid such a situation, it is advantageous to recirculate a portion of the flue gas back to the furnace, whereby the average oxygen content of the combustion gas can preferably be adjusted to the proximity of the oxygen content of air, 21 %, for example, 20% - 26%. When the oxygen content of the combustion gas is close to the oxygen content of the air, the structure and combustion process of the oxycombustion boiler can advantageously be close to the structure and combustion process of a conventional air combustion boiler. Thus, the oxycombustion boiler designed in this manner can possibly be used also in air combustion mode.

US patent application document US 2004 175663 discloses a method of controlling combustion according to the preamble of claim 1.

US Patent No. 6,935,251 discloses a method of combusting fuel using combustion gas, which is a mixture of gas, which contains more oxygen than air, and recycled flue gas. According to the method disclosed in the patent, the rate of the flue gas recirculation is determined in such a manner that the flue gas mass flow rate is smaller than the corresponding flue gas mass flow rate in the air combustion. US Patent No. 6,418,865 discloses a method of converting an air combustion boiler to a boiler combusting with oxygen-enriched air, in which the gas flow rate is adjusted in such a manner that the heat transfer efficiency does not change.

US Patent Application Publication No. 2009/272300 discloses a method of controlling an oxygen-fired boiler, in which oxygen is supplied according to the load demand, and the recirculation flow rate of the flue gas is controlled in such a manner that a targeted amount of heat is recovered from the boiler. US Patent Application Publication 2009/158978 discloses a method of controlling an oxycombustion boiler, in which method the recirculation flow rate of the flue gas is adjusted in different loads in such a manner that the flow of the flue gas is constant. None of the publications illustrating the prior art discloses, how the oxycombustion boiler can especially be utilized when combusting different fuels in one boiler.

An object of the present invention is to provide an advantageous method of combusting fuels or mixtures of fuels having different heat values in one oxycombustion boiler.

In order to minimize at least some problems of the prior art, a method is provided for combustion of fuels or mixtures of fuels having different lower heat values in one boiler, the characterizing features of which method are disclosed in the characterizing part of the independent claim. Prior to the steps (a1) and (a2) the value of a variable commensurate with the lower heat value of the first fuel or mixture of fuels and the second fuel or mixture of fuels, re-spectively is definedIt is characteristic of the present method to adjust the recirculating portion of the flue gas to be lower when combusting the fuel or mixture of fuels having a lower value of the variable commensurate with the lower heat value of the fuel or mixture of fuels than the recirculating portion of the flue gas when combusting the fuel or mixture of fuels having a higher value of the variable commensurate with the lower heat value of the fuel or mixture of fuels.

The variable commensurate with the lower heat value of the fuel is, according to a preferred embodiment of the invention, the lower heat value of the fuel, determined by means of a known method, for example, calorimetrically. According to another preferred embodiment of the invention, the variable commensurate with the lower heat value of the fuel is determined on the basis of the measured water content of the fuel. This method is simple and especially advantageous when the water content of the fuels available varies a lot. For example, the proportion of the dry content in the fuel can be considered as the variable commensurate with the lower heat value of the fuel. In practice, for example, the water content of bituminous coal can be approximately 10%, whereas, for example, that of wet lignite and biofuels can typically be approximately 50% - 60%. In this context, the water content of the fuel refers to the ratio of the weight of the water in the fuel to the weight of the wet fuel.

When a relatively small amount of flue gas is recirculated to the furnace, when combusting fuel having a low lower heat value (LHV), the average oxygen content of the combustion gas is relatively high. The high oxygen content results in that the intensity of combustion, in other words the rate of combustion, of the fuel increases. Owing to the increased rate of combustion, the combustion of the fuel having a low lower heat value takes place rapidly. Thus, according to the present invention, when the recirculating portion of the flue gas is adjusted on the basis of the value of a variable commensurate with the heat value of the fuel, the size of an oxycombustion boiler using fuels having different heat values can be appropriately chosen without a need to increase the size uneconomically large on the basis of the fuel, of all available fuels, having the lowest lower heat value.

According to a preferred embodiment of the invention, the boiler is dimensioned assuming that when combusting a fuel having a higher lower heat value than any other available fuel, the average oxygen content of the combustion gas is approximately the same as the oxygen content of air, preferably approximately 18 - 29 %, most preferably approximately 20 - 28 %. Thereby, when combusting fuels having a lower lower heat value, less flue gas is recirculated back to the furnace than when combusting fuels having higher lower heat value. The result thereof is that when combusting fuels having a relatively low lower heat value, the average oxygen content of the combustion gas is preferably significantly higher than the oxygen content of the air, preferably approximately 30 % - 50 %, most preferably approximately 32 %-44%.

The fuel having the higher value of the variable commensurate with the lower heat value of the fuel is preferably, in accordance with the invention, one of the following, or a mixture of any of the following: bituminous coal, anthracite, petroleum coke, pelletized wood, dried lignite, dried peat, or other dried solid fuel, the water content of which is relatively low, preferably 10-20%.

The fuel having the lower value of the variable commensurate with the lower heat value of the fuel is preferably, in accordance with the invention, one of the following or a mixture of any of the following: wet lignite, brown coal, peat or biofuel or any other solid fuel, the water content of which is relatively high, preferably 40 - 65 %.

The invention can be applied in fluidized bed boilers, especially in circulating fluidized bed boilers. In some cases, the invention can also be used in other boiler types, for example, in grate boilers or in PC boilers.

In the following computational example, the combustion of four fuels having different lower heat values (LHV) in the same circulating fluidized bed type oxycombustion boiler is studied using the method in accordance with the present invention. The fuels and the lower heat values thereof used in the study are:
- 1.: Dried lignite (18.4 MJ/kg),
- 2.: Wet lignite (8,6 MJ/kg),
- 3.: Bituminous coal (24,3 MJ/kg) and
- 4.: Mixture of wet lignite and biofuel in ratio 50/50 (7,1 MJ/kg).

The boiler used in the study is dimensioned in such a manner that it is possible to advantageously combust the fuels with the highest heat values by recirculating approximately 67% of the flue gas back to the furnace. Thereby, the average oxygen content of the combustion gas is approximately 25%. The amount of oxygen is chosen in every case in such a manner that the amount of residual oxygen in the dry flue gas is constant. For the different fuels, the less flue gas was recirculated the lower the lower heat value of the fuel was. The table below discloses, for the different fuels, the proportion of recirculating flue gas, which was discovered to be advantageous for each fuel, and the average oxygen contents of the combustion gas thus obtained.

| | 1. | 2. | 3. | 4. |
|---|---|---|---|---|
| Recirculating flue gas | 0,67 | 0,42 | 0,68 | 0,32 |
| O₂-content (%-mol) | 25 | 34 | 25 | 40 |

The table below discloses, correspondingly, for each fuel, the computed temperature and gas velocity at the upper portion of the furnace:

| | 1. | 2. | 3. | 4. |
|---|---|---|---|---|
| Temperature (°C) | 858 | 863 | 880 | 870 |
| Velocity (m/s) | 4,6 | 5,1 | 4,8 | 5,4 |

In this example, for example, the lower heat value of the bituminous coal is almost 3.4 times the lower heat value of the mixture of wet lignite and biofuel. With the rates of recycling flue gas proved advantageous in view of constancy of the combustion process, the highest gas velocity in the furnace, which was obtained with the mixture of wet lignite and biofuels, was only approximately 17% higher than the lowest flue gas flow rate, which was obtained with dried lignite. The temperature in the upper portion of the furnace obtained with dried lignite was 22 °C lower than the temperature obtained with bituminous coal, whereas the temperatures obtained with fuels containing more water remained between these extreme values.

In the different cases of the study, the steam output of the plant was constant. Thus, fuels having low heat values, in other words in practice wet fuels, were supplied significantly more than dry fuels. The boiler capacity when using wet fuels remained to a certain extent lower than the boiler capacity when using dry fuels. The computed share of the unburned coal was in each case small (0,37 % - 0,57 %), and, thus, the combustion of fuels having low heat values was also successful.

The water evaporating from wet fuels considerably increases the volume flow of the flue gas, but, as can be seen in the results, the decreased recirculation of the flue gas used with wet fuels compensates the flue gas flow in such a manner that the flue gas flow rate is almost constant. According to a preferred embodiment of the present invention, the recirculating portion of the flue gas is calculated in such a manner that the flue gas flow rate with fuels having different water contents, for example, in the upper portion of the furnace, is approximately equal.

In the calculated example, the water contents of the fuels 1 - 4 were 12 %, 53.4 %, 12.5 %, and 57,28 %, respectively. Thus, the respective dry contents of the fuels were 88 %, 46.6 %, 87.5 %, and 42.72 %. This shows that in the calculated advantageous combustion processes 1 - 4, the ratio of the recirculating portion of flue gas and the dry portion of the fuel is almost constant, in other words 0.76, 0.90, 0.78, and 0.75, respectively. Thus, the highest value of the ratio between the recirculating portion of the flue gas and the dry portion of the fuel is only 20% higher than the lowest value of the ratio. According to a preferred embodiment of the present invention, the recirculating portion of the flue gas is calculated in such a manner that the ratio of the recirculating portion of the flue gas and the dry portion of the fuel being combusted is maintained approximately constant.

In the exemplary case, the amounts of the recirculating flue gas chosen for each fuel resulted in the average oxygen content values of the combustion gas, the ratios of the inverses of which with the square root of the lower heat value of the respective fuels were 0.0093, 0.0100, 0.0081 and 0.0094, respectively. In other words, the highest value of the above mentioned variable was only approximately 23% higher than the lowest value of the variable. Thus, according to a preferred embodiment of the present invention, the flow rate of the recirculating flue gas is chosen in such a way that the average oxygen content of the combustion gas is approximately inversely proportional to the square root of the lower heat value of the fuel being combusted.

The above example shows that by means of the method in accordance with the present invention, it is possible to advantageously combust fuels having a large variety of lower heat values in one oxycombustion boiler. By means of the method, it is possible to provide a desired, almost constant temperature and gas velocity at the upper portion of the furnace by adjusting the amount of the recirculating gas on the basis of a variable commensurate with the lower heat value of the fuel being combusted.

Different calculation methods of controlling the recirculating rate of the flue gas on the basis of the characteristics of the fuel being combusted have been disclosed above. When the amount of the recirculating gas is determined, in practice the minimum and maximum values dependent on other reasons also have to be considered. Since a small amount of the recirculating flue gas increases the oxygen content of the combustion gas, it also increases the temperature of the fluidized bed boiler. Thus, the smallest possible portion of recirculating gas is determined by the temperature which the bed material used endures without being sintered. Respectively, the highest portion of the recirculating gas is determined by erosion caused by high gas velocity, which in practice also depends on the temperature.

The use of recirculating gas also contributes to the internal power consumption and thus also to the net capacity of the plant. In practice, the temperature and the temperature distribution of the furnace can also be adjusted by staging of the combustion gas, in other words, for example, by controlling the ratio between the fluidizing gas and the secondary gas. Thus, it is possible to further minimize also the amount of unburned coal and emissions generating in the combustion.

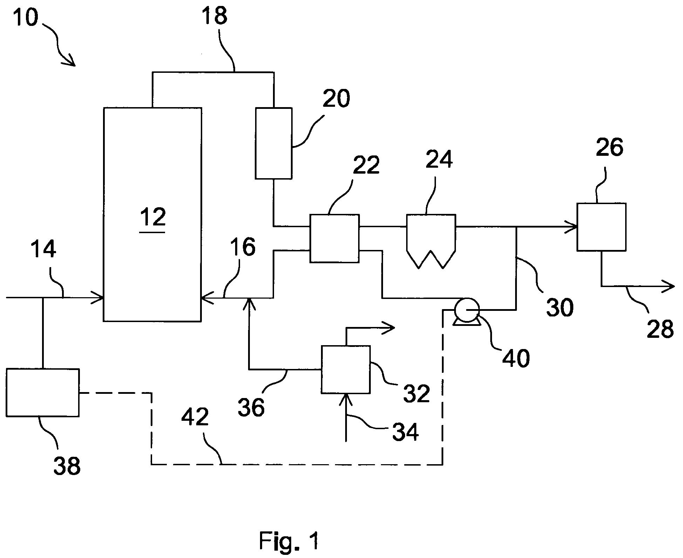

The invention is described, by way of example, more in detail with reference to the accompanying schematic drawing, in which
- Fig. 1: schematically illustrates an oxycombustion boiler used in an application of a method in accordance with the invention.

Fig. 1 schematically illustrates an oxycombustion boiler 10, to the furnace 12 of which fuels or mixtures of fuels are introduced through an inlet connection 14, the lower heat value of which varies. The boiler of the oxycombustion plant is preferably a circulating fluidized bed boiler, but in some cases it can also be of other boiler type, such as a PC boiler. Fig. 1 illustrates only one fuel inlet, but in practice there are usually a number of fuel inlets in order to render a homogeneous distribution of fuel possible throughout the entire furnace. The fuels are combusted by feeding combustion gas comprising substantially pure oxygen and recirculating flue gas through an inlet connection 16 for combustion gas to the furnace 12. Fig. 1 illustrates only one inlet connection for combustion gas, but, in practice, there are usually a number of inlet connections for combustion gas in order to render the supply of, for example, fluidizing combustion gas to the bottom of the furnace and secondary combustion gas to the upper portions of the furnace possible. Also other inlets connected to the furnace are possible, such as inlet connections for sulfur-binding agents. These, as well as any other conventional devices, which do not have any special meaning in the present invention, are not shown in Fig. 1.

When the fuel burns, flue gas, which mainly consists of carbon dioxide, water and residual oxygen, is generated. The flue gas is discharged from the furnace to a flue gas channel 18. The flue gas channel usually comprises conventional heat transfer surfaces 20 required for steam generation, a preheater 22 for combustion gas and conventional cleaning devices 24 for flue gas. The flue gas channel preferably leads to a cleaning and recovery system 26 for carbon dioxide, which generates almost pure liquid carbon dioxide 28 to be reutilized or stored. The flue gas channel 18 is connected prior to the cleaning and recovery system 26 for carbon dioxide to a channel 30 recirculating flue gas, along which it is possible to recirculate a portion of the flue gas back to the furnace.

The oxycombustion 10 comprises an air separation unit 32, for example, a cryogenic air separation unit. Almost pure oxygen 36 is separated from air 34 being fed to said air separation unit to be fed to the furnace 12. It is also possible that the oxygen flow required for the oxycombustion plant is obtained from another kind of pure oxygen source than an air separation unit. The oxygen flow 36 is generally supplied to the furnace 12 through an inlet connection 16 for combustion gas mixed with flue gas recirculating through channel 30. It is, however, possible to feed at least a portion of the oxygen flow directly to the furnace, or mixture of oxygen and recirculating flue gas can be supplied, possibly in different mix proportions, to different portions of the furnace.

In the system in accordance with Fig. 1, heat is transferred by means of the preheater 22 for combustion gas from the flue gas to the recirculating flue gas. The preheater for combustion gas can alternatively be arranged in such a manner that heat is transferred from the flue gas to the mixture of recirculating flue gas and oxygen. A third alternative is to separately transfer heat from the flue gas to the oxygen flow by an appropriate known manner, for example, by means of a separate water circulation.

Fig. 1 also illustrates a control device 38 for analyzing the lower heat value of the fuel being fed to the furnace and for forming a control signal to control the recirculation of the flue gas. The analysis of the lower heat value of the fuel can be performed, for example, by means of a calorimetric method from the fuel samples taken at certain intervals. The control signal is formed on the basis of the value of a variable commensurate with the lower heat value of the fuel, as measured by an appropriate algorithm or obtained by any other method. A signal line 42 connects the control device 38 to an apparatus 40, such as blower, for controlling the amount of recirculating flue gas. In practice, the amount of recirculation of the flue gas can in some cases also be manually adjusted in connection with the fuel change. According to the present invention, the higher the lower heat value (LHV) of the fuel or fuel mixture is, the more flue gas is recirculated.

The furnace 12 and the flue gas channel 18 are preferably dimensioned in such a manner that the amount of recirculating flue gas, when combusting fuel having a higher lower heat value than any other fuel available, is such that the average oxygen content of the combustion gas is approximately equal to the oxygen content of air, for example, approximately 20 % - 28 %. Thereby, less flue gas is recirculated to the furnace when combusting fuels having a lower lower heat value, whereby the average oxygen content of the combustion gas is significantly higher than the oxygen content of the air, for example, approximately 30 % - 50 %.

The factor contributing most to the lower heat value of the fuels is usually the water content of the fuel. Thus, according to a preferred embodiment of the invention, the control device 38 is connected to a device for determining the water content of the fuel, and the drier the fuel being used each time is, the more flue gas the device controlling the recirculation is adjusted to recirculate. Typically, with so called dry fuels, the water content of which is approximately 10 - 20 %, approximately 75 - 60 % of the flue gas is recirculated back to the furnace, respectively. When the water content of the fuel rises, the recirculation of the flue gas is diminished. For example, when the water content is approximately 40 - 65 %, typically approximately 50 - 25 % of the flue gas is recirculated, respectively.

In the above described manner, the diminished flue gas recirculation when using wet fuels compensates the increase in flue gas flow caused by the water content of the fuel, and the flue gas flow rate is almost constant. Correspondingly, according to a preferred embodiment of the present invention, the amount of the recirculating flue gas is calculated on the basis of the water content of the fuel in such a manner that the flue gas flow rate, for example, in the upper portion of the furnace is with fuels having different water contents approximately equal.

According to a second preferred embodiment of the present invention, the value of the variable commensurate with the heat value of the fuel is the share of the dry portion of the fuel, and the portion of the recirculating flue gas with different fuels is chosen in such a manner that the ratio between the recirculating portion and the share of the dry portion in each fuel is approximately constant. The inventor of the present invention has surprisingly discovered that when determining the portion of the recirculating flue gas in the above described manner, it is possible to combust fuels having different water content in one oxycombustion boiler and obtain good boiler efficiency.

According to a third preferred embodiment of the present invention, the portion of the recirculating flue gas used with different fuels is calculated directly on the basis of the measured or otherwise known lower heat value of the fuel in such a manner that the recirculating portion of the flue gas is approximately inversely proportional to the square root of the lower heat value of the fuel being combusted. The inventor of the present invention has surprisingly discovered that when determining the recirculating portion of the flue gas in the above described manner, it is possible to combust fuels having different water content in one oxycombustion boiler and obtain good boiler efficiency.

The present invention enables the possibility to combust fuels having different heat value in one thermal power boiler, which boiler can be dimensioned on the basis of the fuel having a higher lower heat value than any other fuel available. This solution substantially differs from the known method to combust different fuels in one air combustion boiler, in which the boiler has to be dimensioned on the basis of the fuel having a lower lower heat value than any other fuel available.

The invention has been described above with reference to some exemplary embodiments. These embodiments are, however, not given to limit the invention from what is defined the appended claims and the definitions therein, which solely determine the scope of invention.

## Claims

1. A method of controlling combustion of a first solid fuel or mixture of fuels having a first lower heat value and a second solid fuel or mixture of fuels having a second lower heat value, which differs from the first lower heat value, in an oxycombustion boiler having a furnace, said method comprising the following steps when combusting the first fuel or mixture of fuels:
(a1) feeding the first fuel or mixture of fuels into the furnace;
(b1) feeding a stream of substantially pure oxygen into the furnace for combusting the first fuel or mixture of fuels;
(c1) removing flue gas generated in the combustion of the first fuel or mixture of fuels from the furnace; and
(d1) recirculating a portion of the flue gas back to the furnace, and the following steps when combusting the second fuel or mixture of fuels:
(a2) feeding the second fuel or mixture of fuels into the furnace;
(b2) feeding a stream of substantially pure oxygen into the furnace for combusting the second fuel or mixture of fuels;
(c2) removing flue gas generated in the combustion of the second fuel or mixture of fuels from the furnace, and
(d2) recirculating a portion of the flue gas back to the furnace; defining prior to the steps (a1) and (a2) the value of a variable commensurate with the lower heat value of the first fuel or mixture of fuels and the second fuel or mixture of fuels, respectively, and **characterized by** and adjusting the recirculating portion of the flue gas to be lower when combusting the fuel or mixture of fuels having a lower value of the variable commensurate with the lower heat value of the fuel or mixture of fuels than the recirculating portion of the flue gas when combusting the fuel or mixture of fuels having a higher value of the variable commensurate with the lower heat value of the fuel or mixture of fuels.

2. The method in accordance with claim 1, **characterized in that** about 60-75% of the flue gas is recirculated back to the furnace when combusting the fuel or mixture of fuels having a higher value of the variable commensurate with the lower heat value of the fuel or mixture of fuels and about 25-50% of the flue gas is recirculated back to the furnace when combusting the fuel or mixture of fuels having a lower value of the variable commensurate with the lower heat value of the fuel or mixture of fuels.

3. The method in accordance with claim 1, **characterized in that** when combusting the fuel or mixture of fuels having a higher value of the variable commensurate with the lower heat value of the fuel or mixture of fuels, such a portion of the flue gas is recirculated back to the furnace that the average oxygen content of a combustion gas, comprising the stream of substantially pure oxygen and the recirculating portion of the flue gas, is about 20 - 28% and when combusting the fuel or mixture of fuels having a lower value of the variable commensurate with the lower heat value of the fuel or mixture of fuels, such a portion of the flue gas is recirculated back to the furnace that the average oxygen content of the combustion gas is about 30 - 50 %.

4. The method in accordance with claim 1, **characterized in that** the variable commensurate with the lower heat value of the fuel or mixture of fuels is the lower heat value of the fuel or mixture of fuels.

5. The method in accordance with claim 4, **characterized in that** the oxycombustion boiler is dimensioned in such a manner that when combusting a fuel or mixture of fuels having a higher lower heat value than any other available fuel or mixture of fuels, the average oxygen content of a combustion gas, comprising the stream of substantially pure oxygen and the recirculating portion of the flue gas, is 18 - 29 %, most preferably 20 - 28 %.

6. The method in accordance with claim 5, **characterized in that** the fuel or mixture of fuels having a higher lower heat value than any other available fuel or mixture of fuels is bituminous coal, anthracite, petroleum coke, pelletized wood, dried lignite, dried peat, or other dried solid fuel or a mixture thereof.

7. The method in accordance with claim 4, **characterized in that** the oxycombustion boiler is dimensioned in such a manner that when combusting a fuel or mixture of fuels having a lower lower heat value than any other available fuel or mixture of fuels, the average oxygen content of a combustion gas, comprising the stream of substantially pure oxygen and the recirculating portion of the flue gas, is 30 - 50 %, most preferably 32 - 44 %.

8. The method in accordance with claim 7, **characterized in that** the fuel or mixture of fuels having a lower lower heat value than any other available fuel or mixture of fuels is wet lignite, brown coal, peat or biofuel or a mixture thereof.

9. The method in accordance with claim 4, **characterized in that** when combusting the first fuel or mixture of fuels or the second fuel or mixture of fuels, the recirculating portion of the flue gas is chosen in such a manner that the average oxygen content of a combustion gas, comprising the stream of substantially pure oxygen and the recirculating portion of the flue gas, is approximately inversely proportional to the square root of the lower heat value of the fuel or mixture of fuels being combusted.

10. The method in accordance with claim 1, **characterized in that** the variable commensurate with the lower heat value of the fuel or mixture of fuels is determined on the basis of the water content of the fuel or mixture of fuels.

11. The method in accordance with claim 10, **characterized in that** when combusting the first fuel or mixture of fuels and the second fuel or mixture of fuels, the recirculating portion of the flue gas is controlled in such a manner that the flow rate of the flue gas is approximately unchanged.

12. The method in accordance with any of claims 1, 10 and 11, **characterized in that** the water content of the fuel or mixture of fuels having with a higher value of the variable commensurate with the lower heat value is about 10 - 20 % and the water content of the fuel or mixture of fuels having a lower value of the variable commensurate with the lower heat value is about 40 - 65%.

13. The method in accordance with claim 10, **characterized in that** the variable commensurate with the lower heat value of the fuel or mixture of fuels is the share of dry portion of the fuel or mixture of fuels.

14. The method in accordance with claim 13, **characterized in that** when combusting the first fuel or mixture of fuels or the second fuel or mixture of fuels, the recirculating portion of the flue gas is chosen in such a manner that the ratio of the share of the recirculating portion of the flue gas and the share of the dry portion of the fuel or mixture of fuels being combusted is approximately constant.

## Patentansprüche

1. Verfahren zur Regelung der Verbrennung eines ersten festen Brennstoffes oder Brennstoffgemisches mit einem ersten unteren Heizwert und eines zweiten festen Brennstoffes oder Brennstoffgemisches mit einem zweiten unteren Heizwert, der sich vom ersten unteren Heizwert unterscheidet, in einem Oxyverbrennungskessel mit einer Feuerung, welches Verfahren bei der Verbrennung des ersten Brennstoffes oder Brennstoffgemisches folgende Schritte umfasst:
(a1) Aufgabe des ersten Brennstoffes oder Brennstoffgemisches in die Feuerung;
(b1) Zuführung eines Stroms im Wesentlichen reinen Sauerstoffes in die Feuerung zur Verbrennung des ersten Brennstoffes oder Brennstoffgemisches;
(c1) Abzug des bei der Verbrennung des ersten Brennstoffes oder Brennstoffgemisches erzeugten Rauchgases aus der Feuerung; und
(d1) Rückführung eines Anteils des Rauchgases zurück in die Feuerung, und folgende Schritte bei der Verbrennung des zweiten Brennstoffes oder Brennstoffgemisches;
(a2) Aufgabe des zweiten Brennstoffes oder Brennstoffgemisches in die Feuerung;
(b2) Zuführung eines Stroms im Wesentlichen reinen Sauerstoffes in die Feuerung zur Verbrennung des zweiten Brennstoffes oder Brennstoffgemisches;
(c2) Abzug des bei der Verbrennung des zweiten Brennstoffes oder Brennstoffgemisches erzeugten Rauchgases aus der Feuerung; und
(d1) Rückführung eines Teils des Rauchgases zurück in die Feuerung; vor den Schritten (a1) und (a2) Bestimmung einer dem unteren Heizwert des ersten Brennstoffes oder Brennstoffgemisches, beziehungsweise des zweiten Brennstoffes oder Brennstoffgemisches entsprechenden Variable, und **dadurch gekennzeichnet, dass** der rückgeführte Anteil des Rauchgases bei der Verbrennung des Brennstoffes oder Brennstoffgemisches, bei dem der Wert der dem unteren Heizwert des Brennstoffes oder Brennstoffgemisches entsprechenden Variable kleiner ist, kleiner eingestellt wird als der rückgeführte Anteil des Rauchgases bei der Verbrennung des Brennstoffes oder Brennstoffgemisches, bei dem der Wert der dem unteren Heizwert des Brennstoffes oder Brennstoffgemisches entsprechenden Variable höher ist.

2. Verfahren nach Patentanspruch 1, **dadurch gekennzeichnet, dass** bei der Verbrennung des Brennstoffes oder Brennstoffgemisches mit einem höheren Wert der dem unteren Heizwert entsprechenden Variable ungefähr 60 bis 75 % des Rauchgases und bei der Verbrennung des Brennstoffes oder Brennstoffgemisches mit einem niedrigeren Wert der dem unteren Heizwert entsprechenden Variable ungefähr 25 bis 50 % in die Feuerung zurückgeführt werden

3. Verfahren nach Patentanspruch 1, **dadurch gekennzeichnet, dass** bei der Verbrennung des Brennstoffes oder Brennstoffgemisches mit einem höheren Wert der dem unteren Heizwert des Brennstoffes oder Brennstoffgemisches entsprechenden Variable solch ein Anteil des Rauchgases in die Feuerung zurückgeführt wird, dass der mittlere Sauerstoffgehalt des Verbrennungsgases, bestehend aus den Strom im Wesentlich reinen Sauerstoffes und dem rückgeführten Anteil des Rauchgases umfassend, bei ungefähr 20 bis 28 % liegt, und bei der Verbrennung des Brennstoffes oder Brennstoffgemisches mit einem niedrigeren Wert der dem unteren Heizwert des Brennstoffes oder Brennstoffgemisches entsprechenden Variable solch ein Anteil des Rauchgases in die Feuerung zurückgeführt wird, dass der mittlere Sauerstoffgehalt des Verbrennungsgases bei ungefähr 30 bis 50 % liegt.

4. Verfahren nach Patentanspruch 1, **dadurch gekennzeichnet, dass** es sich bei der dem unteren Heizwert des Brennstoffes oder Brennstoffgemisches entsprechenden Variable um den unteren Heizwert des Brennstoffes oder Brennstoffgemisches handelt.

5. Verfahren nach Patentanspruch 4, **dadurch gekennzeichnet, dass** der Oxyverbrennungskessel solcherart bemessen ist, dass bei der Verbrennung eines Brennstoffes oder Brennstoffgemisches, bei dem der untere Heizwert höher liegt als bei jedem anderen verfügbaren Brennstoff oder Brennstoffgemisch, der mittlere Sauerstoffgehalt des Verbrennungsgases, das aus dem Strom im Wesentlichen reinen Sauerstoffes und dem rückgeführten Anteil des Rauchgases besteht, bei 18 bis 29, am bevorzugtesten bei 20 bis 28 % liegt.

6. Verfahren nach Patentanspruch 5, **dadurch gekennzeichnet, dass** es sich beim Brennstoff oder Brennstoffgemisch, bei dem der untere Heizwert höher ist als bei jedem anderen verfügbaren Brennstoff oder Brennstoffgemisch, um Steinkohle, Anthrazit, Petrolkoks, pelletiertes Holz, getrocknetes Lignit, getrockneten Torf oder einen anderen getrockneten festen Brennstoff oder deren Gemisch handelt.

7. Verfahren nach Patentanspruch 4, **dadurch gekennzeichnet, dass** der Oxyverbrennungskessel solcherart dimensioniert ist, dass bei der Verbrennung eines Brennstoffes oder Brennstoffgemisches, bei dem der untere Heizwert niedriger ist als bei jedem anderen verfügbaren Brennstoff oder Brennstoffgemisch, der mittlere Sauerstoffgehalt eines Verbrennungsgases, das aus dem Strom im Wesentlichen reinen Sauerstoffes und dem rückgeführten Anteil des Rauchgases besteht, bei 30 bis 50 %, am bevorzugtesten bei 32 bis 44 % liegt.

8. Verfahren nach Patentanspruch 7, **dadurch gekennzeichnet, dass** es sich beim Brennstoff oder Brennstoffgemisch, bei dem der untere Heizwert niedriger ist als bei jedem anderen verfügbaren Brennstoff oder Brennstoffgemisch, um nasses Lignit, Braunkohle, Torf oder Biobrennstoff oder deren Gemisch handelt.

9. Verfahren nach Patentanspruch 4, **dadurch gekennzeichnet, dass** bei der Verbrennung des ersten Brennstoffes oder Brennstoffgemisches oder des zweiten Brennstoffes oder Brennstoffgemisches der rückgeführte Anteil des Rauchgases derart gewählt wird, dass der mittlere Sauerstoffgehalt eines Verbrennungsgases, das aus dem Strom aus im Wesentlichen reinen Sauerstoffes und dem rückgeführten Anteil des Rauchgases besteht, in etwa umgekehrt proportional zur Quadratwurzel des unteren Heizwerts des verheizten Brennstoffes oder Brennstoffgemisches ist.

10. Verfahren nach Patentanspruch 1, **dadurch gekennzeichnet, dass** die dem unteren Heizwert des Brennstoffes oder Brennstoffgemisches entsprechende Variable auf der Grundlage des Wassergehalts des Brennstoffes oder Brennstoffgemisches bestimmt wird.

11. Verfahren nach Patentanspruch 10, **dadurch gekennzeichnet, dass** bei der Verbrennung des ersten Brennstoffes oder Brennstoffgemisches und des zweiten Brennstoffes oder Brennstoffgemisches der rückgeführte Anteil des Rauchgases derart kontrolliert wird, dass der Rauchgasdurchsatz in etwa unverändert bleibt.

12. Verfahren nach einem der Patentansprüche 1, 10 und 11, **dadurch gekennzeichnet, dass** der Wassergehalt des Brennstoffes oder Brennstoffgemisches, bei dem der Wert der dem unteren Heizwert entsprechenden Variable höher ist, bei ungefähr 10 bis 20 % liegt und der Wassergehalt des Brennstoffes oder Brennstoffgemisches, bei dem der Wert der dem unteren Heizwert entsprechenden Variable niedriger ist, bei ungefähr 40 bis 65 % liegt.

13. Verfahren nach Patentanspruch 10, **dadurch gekennzeichnet, dass** es sich bei der dem unteren Heizwert des Brennstoffes oder Brennstoffgemisches entsprechende Variable um den Anteil des trockenen Anteil des Brennstoffes oder Brennstoffgemisches handelt.

14. Verfahren nach Patentanspruch 13, **dadurch gekennzeichnet, dass** bei der Verbrennung des ersten des Brennstoffes oder Brennstoffgemisches oder des zweiten des Brennstoffes oder Brennstoffgemisches der rückgeführte Anteil des Rauchgases so gewählt ist, dass das Verhältnis des Anteils des rückgeführten Teils des Rauchgases und der Anteil des trockenen Teils des verfeuerten Brennstoffes oder Brennstoffgemisches annähernd konstant ist.

## Revendications

1. Procédé de commande de la combustion d'un premier combustible solide ou d'un mélange de combustibles ayant un premier pouvoir calorifique plus bas et un second combustible solide ou mélange de combustibles ayant un second pouvoir calorifique plus bas, qui est différent du premier pouvoir calorifique plus bas, dans une chaudière à oxycombustion dotée d'un four, ledit procédé comprenant les étapes suivantes lors de la combustion du premier combustible ou mélange de combustibles :
(a1) fourniture du premier combustible ou mélange de combustibles dans le four ;
(b1) fourniture d'un flux d'oxygène sensiblement pur dans le four pour la combustion du premier combustible ou mélange de combustibles ;
(c1) élimination du gaz de combustion généré dans la combustion du premier combustible ou mélange de combustibles du four ; et
(d1) remise dans le circuit d'une portion du gaz de combustion vers le four,
et les étapes suivantes lors de la combustion du second combustible ou mélange de combustibles :
(a2) fourniture du second combustible ou mélange de combustibles dans le four ;
(b2) fourniture d'un flux d'oxygène sensiblement pur dans le four pour la combustion du second combustible ou mélange de combustibles ;
(c2) élimination du gaz de combustion généré dans la combustion du second combustible ou mélange de combustibles du four ; et
(d2) remise dans le circuit d'une portion du gaz de combustion vers le four ;
définition avant les étapes (a1) et (a2) de la valeur d'une variable proportionnelle au pouvoir calorifique plus bas du premier combustible ou mélange de combustibles et du second combustible ou mélange de combustibles, respectivement,
et **caractérisé par** l'ajustement de la portion de remise dans le circuit du gaz de combustion pour qu'elle soit plus basse lors de la combustion du combustible ou mélange de combustibles ayant une valeur plus basse de la variable proportionnelle au pouvoir calorifique plus bas du combustible ou mélange de combustibles que la portion de remise en circuit du gaz de combustion lors de la combustion du combustible ou mélange de combustibles ayant une valeur plus élevée de la variable proportionnelle au pouvoir calorifique plus bas du combustible ou mélange de combustibles.

2. Procédé selon la revendication 1, **caractérisé en ce qu'**environ 60 à 75 % du gaz de combustion sont remis en circuit vers le four lors de la combustion du combustible ou mélange de combustibles ayant une valeur plus élevée de la variable proportionnelle au pouvoir calorifique plus bas du combustible ou mélange de combustibles et environ 25 à 50 % du gaz de combustion sont remis en circuit vers le four lors de la combustion du combustible ou mélange de combustibles ayant une valeur plus basse de la variable proportionnelle au pouvoir calorifique plus bas du combustible ou mélange de combustibles.

3. Procédé selon la revendication 1, **caractérisé en ce que**, lors de la combustion du combustible ou mélange de combustibles ayant une valeur plus élevée de la variable proportionnelle au pouvoir calorifique plus bas du combustible ou mélange de combustibles, une telle portion du gaz de combustion est remise dans le circuit vers le four de sorte que la teneur en oxygène moyenne d'un gaz de combustion, comprenant le flux d'oxygène sensiblement pur et la portion de remise dans le circuit du gaz de combustion, soit d'environ 20 à 28 %, et lors de la combustion du combustible ou mélange de combustibles ayant une valeur plus basse de la variable proportionnelle au pouvoir calorifique plus bas du combustible ou mélange de combustibles, une telle portion du gaz de combustion est remise dans le circuit vers le four de sorte que la teneur en oxygène moyenne du gaz de combustion soit d'environ 30 à 50 %.

4. Procédé selon la revendication 1, **caractérisé en ce que** la variable proportionnelle au pouvoir calorifique plus bas du combustible ou mélange de combustibles est le pouvoir calorifique plus bas du combustible ou mélange de combustibles.

5. Procédé selon la revendication 4, **caractérisé en ce que** la chaudière à oxycombustion est dimensionnée de telle sorte que, lors de la combustion d'un combustible ou mélange de combustibles ayant un pouvoir calorifique plus bas plus élevé que tout autre combustible ou mélange de combustibles disponible, la teneur en oxygène moyenne d'un gaz de combustion, comprenant le flux d'oxygène sensiblement pur et la portion de remise dans le circuit du gaz de combustion, est de 18 à 29 %, de manière plus préférée de 20 à 28 %.

6. Procédé selon la revendication 5, **caractérisé en ce que** le combustible ou mélange de combustibles ayant un pouvoir calorifique plus bas plus élevé que tout autre combustible ou mélange de combustibles disponible est le charbon bitumineux, l'anthracite, le coke de pétrole, des granules de bois, le lignite séché, la tourbe séchée, ou un autre combustible solide séché ou un mélange de ceux-ci.

7. Procédé selon la revendication 4, **caractérisé en ce que** la chaudière à oxycombustion est dimensionnée de telle sorte que lors de la combustion d'un combustible ou mélange de combustibles ayant un pouvoir calorifique plus bas plus bas que tout autre combustible ou mélange de combustibles disponible, la teneur en oxygène moyenne d'un gaz de combustion, comprenant le flux d'oxygène sensiblement pur et la portion de remise dans le circuit du gaz de combustion, est de 30 à 50 %, de manière plus préférée de 32 à 44 %.

8. Procédé selon la revendication 7, **caractérisé en ce que** le combustible ou mélange de combustibles ayant un pouvoir calorifique plus bas plus bas que tout autre combustible ou mélange de combustibles disponible est le lignite humide, le charbon brun, la tourbe, ou un biocombustible ou un mélange de ceux-ci.

9. Procédé selon la revendication 4, **caractérisé en ce que**, lors de la combustion du premier combustible ou mélange de combustibles ou du second combustible ou mélange de combustibles, la portion de remise dans le circuit du gaz de combustion est choisie de telle sorte que la teneur en oxygène moyenne d'un gaz de combustion, comprenant le flux d'oxygène sensiblement pur et la portion de remise dans le circuit du gaz de combustion, est approximativement inversement proportionnelle à la racine carrée du pouvoir calorifique plus bas du combustible ou mélange de combustibles en cours de combustion.

10. Procédé selon la revendication 1, **caractérisé en ce que** la variable proportionnelle au pouvoir calorifique plus bas du combustible ou mélange de combustibles est déterminée sur la base de la teneur en eau du combustible ou mélange de combustibles.

11. Procédé selon la revendication 10, **caractérisé en ce que**, lors de la combustion du premier combustible ou mélange de combustibles et du second combustible ou mélange de combustibles, la portion de remise dans le circuit du gaz de combustion est commandée de telle sorte que le débit du gaz de combustion est approximativement inchangé.

12. Procédé selon l'une quelconque des revendications 1, 10 et 11, **caractérisé en ce que** la teneur en eau du combustible ou mélange de combustibles ayant une valeur plus élevée de la variable proportionnelle au pouvoir calorifique plus bas est d'environ 10 à 20 % et la teneur en eau du combustible ou mélange de combustibles ayant une valeur plus basse de la variable proportionnelle au pouvoir calorifique plus bas est d'environ 40 à 65 %.

13. Procédé selon la revendication 10, **caractérisé en ce que** la variable proportionnelle au pouvoir calorifique plus bas du combustible ou mélange de combustibles est la partie de portion sèche du combustible ou mélange de combustibles.

14. Procédé selon la revendication 13, **caractérisé en ce que**, lors de la combustion du premier combustible ou mélange de combustibles ou du second combustible ou mélange de combustibles, la portion de remise dans le circuit de gaz de combustion est choisie de telle sorte que le rapport entre la partie de la portion de remise dans le circuit du gaz de combustion et la partie de la portion sèche du combustible ou mélange de combustibles en cours de combustion est approximativement constant.
